# EUROPEAN PATENT APPLICATION

(11) **EP 2 408 120 A1**
(43) Date of publication of application: **18.01.2012**
(21) Application number: 09841369.3
(22) Date of filing: 23.12.2009
(51) Int. Cl.: H04B 7/00

(54) **METHOD AND DEVICE FOR AVOIDING INTERFERENCE CAUSING BY NON-SYNCHRONIZATION IN RELAY TDD SYSTEM**

(30) Priority: 11.03.2009 CN 200910047402
(71) Applicant: Alcatel Lucent, 75008 Paris (FR)
(72) Inventor: ZHANG, Xiaobo, Shanghai 201206 (CN); YOU, Mingli, Shanghai 201206 (CN)
(74) Representative: Dreiss
(86) International application number: PCT/CN2009/075883
(87) International publication number: WO 2010/102500

(57) **Abstract**

The present invention provides a method and a device for eliminating interference in a wireless relay TDD system. Data is sent between a relay station and a base station by occupying time slots of guard period, thereby the interference caused by non-synchronization between the base station and the relay station is eliminated.

## Description

### FIELD OF THE INVENTION

The present invention relates to a wireless relay TDD (Time Division Duplexing) system, especially to a relay station(RS), a base station(BS) and a mobile terminal(MT) in a wireless relay TDD system.

### BACKGROUND OF THE INVENTION

Currently, RS (Relay Station) has been introduced into IMT-Advanced system for extending the network coverage and enhancing the transmission efficiency. The possibility of implementing RS dual-direction receiving and transmission in different sub-carriers is proposed in the proposals of 3GPP R1-090665 and 3GPP R1-090734. However, no matter whether the proposal that RS implements dual-direction communication can be adopted, how RS satisfies the synchronization requirements with MT( Mobile Terminal) and eNB (evolved Node B) at the same time at the switching point of transmitting/receiving or receiving/transmitting is an urgent issue to be resolved.

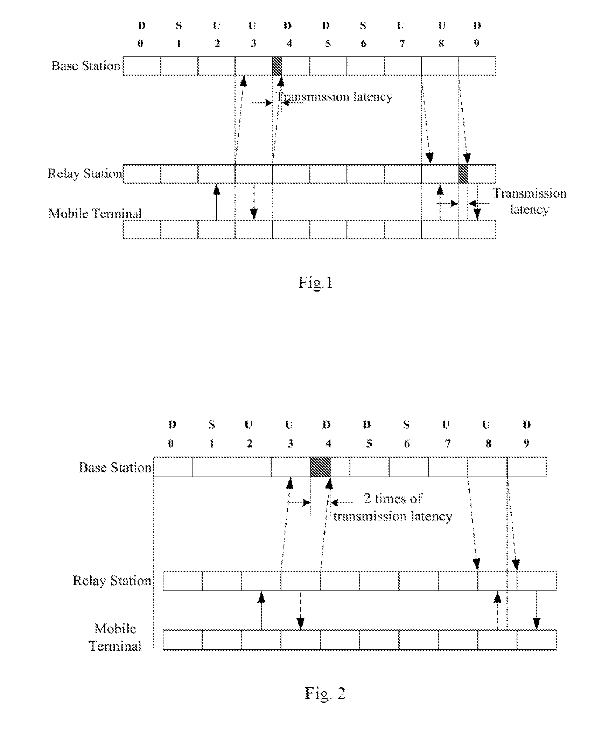

In prior art, the eNB and RS may employ two kinds of synchronization, that is, GPS(Global Positioning System) and AI (Air Interface) synchronization. Fig. 1 and Fig. 2 show the schematic diagrams of the occurred interference problems of the eNB and RS under synchronization of GPS and synchronization of AI respectively. It is to be noted that, the interference problems are described in Fig.1 and Fig.2 by taking the frame structure of configuration 1 proposed in 3GPP TS36.211,v8.5.0 as an example, and without loss of generality, other frame structures in TDD system have the same interference problem as well.

Referring to Fig.1 and Fig.2, assuming that the third sub-frame is the backhaul from RS to eNB, and the eighth sub-frame is the backhaul from eNB to RS. Here, the eighth sub-frame is "stolen UL", that is, in the frame structure defined in TDD system, originally the eighth sub-frame should be an uplink sub-frame, but now it is used as a downlink sub-frame. It is to be noted that the eighth sub-frame here acting as a downlink sub-frame is only for embodying all of the possibly occurred problems in the same frame. In practical application, the eighth sub-frame may still act as an uplink sub-frame.

Usually, because the distance between eNB and RS is relative long, there will be transmission latency in the data transmission between eNB and RS. Assuming that the distance between eNB and RS is r, the transmission latency between eNB and RS is r/c, wherein, c is velocity of light. The transmission latency between MT and RS may be neglected because the distance between MT and RS is relative short.

As shown in Fig.1, for a RS, only after it finishes receiving the second sub-frame from MT, can it send the third sub-frame to the eNB. Because there is transmission latency from the RS to the eNB, the eNB has to send the fourth sub-frame to the RS before completely finishing receiving the third sub-frame from the RS. Therefore, the eNB can only receive part of data of the third sub-frame from the RS and has to give up receiving other data. If the length (namely the latency from the RS to the eNB) of data which the eNB gives up to receive is greater than CP (Cyclic Prefix), then the eNB can not completely recover the content of the third sub-frame from the RS.

Similarly, for the reason of transmission latency from the eNB to the RS, the RS has to send the ninth sub-frame to the MT before completely finishing receiving the eighth sub-frame from the eNB. Therefore the RS can only receive part of data of the eighth sub-frame from the eNB and has to give up receiving other data, thereby it may cause that the RS can not completely recover the content of the eighth sub-frame from the eNB.

Because the eNB and the RS are under synchronization of AI in Fig.2, there is no interference problem between the eighth sub-frame and the ninth sub-frame, however, it may be seen from Fig.2 that the interference problem between the third sub-frame and the fourth sub-frame is more serious than that under synchronization of GPS.

### SUMMARY OF THE INVENTION

In order to solve the aforesaid disadvantages in the prior art, the present invention proposes a method and device for eliminating interference in a wireless relay TDD system, particularly, by reducing the GP (Guard Period) of a relay station by a predetermined time length and performing data receiving and data sending by using the reduced predetermined time length, interference caused by non-synchronization between an eNB and a RS is avoided.

According to the first aspect of the present invention, there is provided a method of eliminating interference in a wireless relay TDD system, wherein, the method comprises the step of: reducing the GP of a relay station by a predetermined time length and performing data receiving and data sending by using the reduced predetermined time length.

According to the second aspect of the present invention, there is provided a method of eliminating interference in a relay station of a wireless relay TDD system, wherein, the method comprises the step of: reducing the GP of a relay station by a predetermined time length and performing data receiving and data sending by using the reduced predetermined time length.

According to the third aspect of the present invention, there is provided a method of assisting a relay station to eliminate interference in a base station of a wireless relay TDD system, wherein, the method comprises the step of: assisting the relay station that uses the method according to the aforesaid second aspect, to perform data receiving and sending.

According to the fourth aspect of the present invention, there is provided an interference eliminating device for eliminating interference in a wireless relay TDD system, wherein, the interference eliminating device is used for reducing the GP of a relay station by a predetermined time length and performing data receiving and data sending by using the reduced predetermined time length.

According to the fifth aspect of the present invention, there is provided an assisting interference eliminating device, for assisting a relay station to eliminate interference in a base station of a wireless relay TDD system, wherein, the assisting interference eliminating device is used for assisting the relay station that uses the interference eliminating device according to the aforesaid fourth aspect, to perform data receiving and sending.

By using the technical solution of the present invention, interference caused due to non-synchronization between an eNB and a RS may be avoided.

### BRIEF DESCRIPTION OF THE DRAWINGS

By reading the detailed description of the non-limiting embodiments with reference to the following drawings, other features, objects and advantages of the present invention will become apparent:
Fig. 1 shows a schematic diagram of the occurred interference problems of the eNB and RS under synchronization of GPS in the prior art;
Fig. 2 shows a schematic diagram of the occurred interference problems of the eNB and RS under synchronization of AI in the prior art;
Fig. 3 shows a schematic diagram of the frame structure of eliminating interference by reducing the length of the GP when the eNB and RS are under synchronization of GPS, according to a first embodiment of the present invention;
Fig. 4 shows a flowchart of system method of eliminating interference by reducing the length of the GP when the eNB and RS are under synchronization of GPS, according to a first embodiment of the present invention;
Fig. 5 shows a schematic diagram of the frame structure of eliminating interference by reducing the length of the GP when the eNB and RS are under synchronization of GPS, according to a second embodiment of the present invention;
Fig. 6 shows a flowchart of system method of eliminating interference by reducing the length of the GP when the eNB and RS are under synchronization of GPS, according to a second embodiment of the present invention;
Fig. 7 shows a schematic diagram of the frame structure of eliminating interference by occupying the resource of the GP for data transmission when the eNB and RS are under synchronization of GPS, according to a third embodiment of the present invention;
Fig. 8 shows a flowchart of system method of eliminating interference by occupying the resource of the GP for data transmission when the eNB and RS are under synchronization of GPS, according to a third embodiment of the present invention;
Fig. 9 shows a schematic diagram of the frame structure of eliminating interference by reducing the length of the GP when the eNB and RS are under synchronization of AI, according to a fourth embodiment of the present invention;
Fig. 10 shows a flowchart of system method of eliminating interference by reducing the length of the GP when the eNB and RS are under synchronization of AI, according to a fourth embodiment of the present invention;
Fig. 11 shows a block diagram of system structure of eliminating interference by reducing the length of the GP when the eNB and RS are under synchronization of GPS, according to a fifth embodiment of the present invention;
Fig. 12 shows a block diagram of system structure of eliminating interference by reducing the length of the GP when the eNB and RS are under synchronization of GPS, according to a sixth embodiment of the present invention;
Fig. 13 shows a block diagram of system structure of eliminating interference by occupying the resource of the GP for data transmission when the eNB and RS are under synchronization of GPS, according to a seventh embodiment of the present invention; and
Fig. 14 shows a block diagram of system structure of eliminating interference by reducing the length of the GP when the eNB and RS are under synchronization of AI, according to an eighth embodiment of the present invention;

In drawings, same or similar reference signs refer to the same or similar component.

### DETAILED DESCRIPTION OF EMBODIMENTS

In the followings, the present invention is described in detail with reference to the drawings.

Usually, because RS cell is smaller than eNB cell, it is feasible for RS to use a shorter GP compared with eNB.

Preferably, the GP for RS may be half of the GP for eNB. Even if RS only uses half of the GP for eNB, it is enough for RS, since half of the GP means:
1) the radius of RS cell is at least 10km;
2) the RS's transmission power is only about 6dB lower than the eNB's transmission power;
3) the RS cell can cover from the eNB to the cell edge if the RS is located at the middle position of the eNB and the cell edge;
4) the RS cell can cover the middle point between the eNB and the RS if the RS is located at the cell edge.

Certainly, the GP for RS may be reduced to a value that is smaller than half of the GP for eNB, but it will not influence the essence of the technical solution of the present invention.

Hereinafter, reducing the GP for RS to half of the GP for eNB is taken as example to describe the technical solution of the present invention.

At the same time, hereinafter, the magnitude of transmission latency between the eNB and the RS being equal to half of the magnitude of the GP for eNB (that is, the magnitude of transmission latency between the eNB and the RS is equal to the magnitude of the reduced GP for RS, GP/2) is taken as example to describe the present invention.

### Embodiment 1

The embodiment is for the scenario that the eNB 2 and the RS 1 are under synchronization of GPS and the RS 1 sends the third sub-frame to the eNB 2 after finishing receiving the second sub-frame from the MT 0.

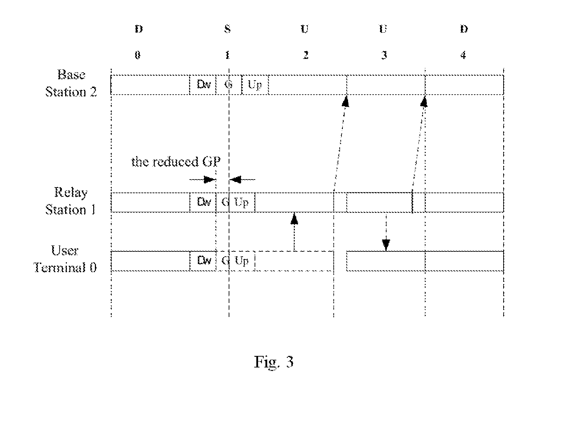

Fig.3 shows a schematic diagram of the frame structure of eliminating interference by reducing the length of the GP when the eNB and RS are under synchronization of GPS, according to a first embodiment of the present invention.

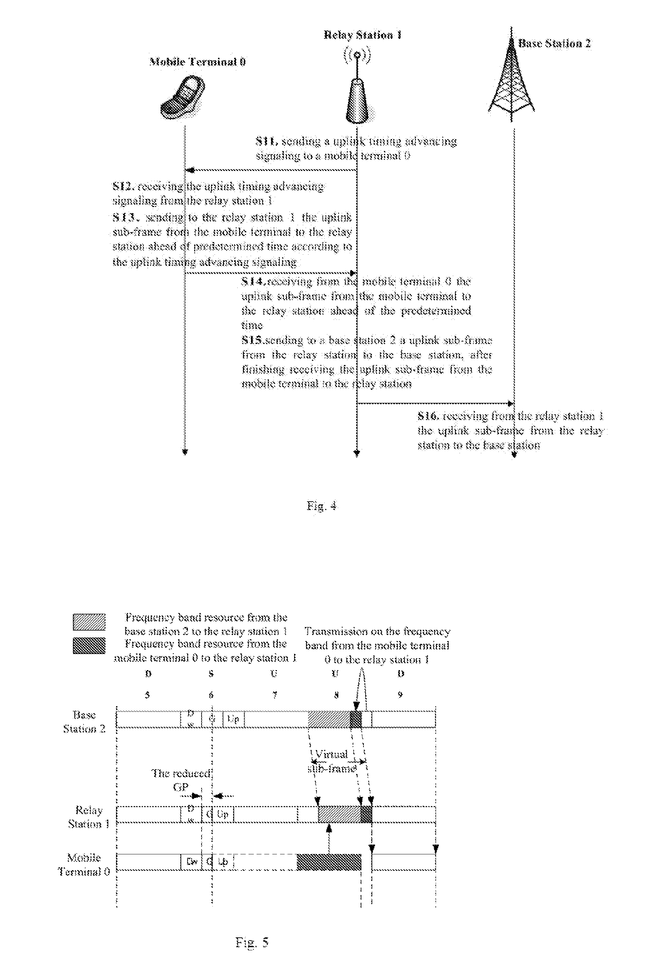

Fig.4 shows a flowchart of method of eliminating interference by reducing the length of the GP when the eNB and RS are under synchronization of GPS, according to a first embodiment of the present invention.

In Fig.3, the 0^{th} sub-frame is a downlink sub-frame, the first sub-frame is a special sub-frame, the second sub-frame is an uplink sub-frame, the third sub-frame is an uplink sub-frame, and the fourth sub-frame is a downlink sub-frame. Wherein, Dw (DwPTS) in the second sub-frame is downlink synchronization time slot, G (GP) is guard period, and Up (UpPTS) is uplink synchronization time slot.

Comparing Fig.2 with Fig.3, it can be seen that the eNB 3 may completely finish receiving the third sub-frame from RS before starting to send the fourth sub-frame by reducing the GP of the RS 1 to half of the GP of the eNB 2 in this embodiment.

After the MT 0 starts up, firstly downlink synchronization should be established with cell, and then uplink synchronization can be started to establish. How the MT 0 establishes downlink synchronization is the prior art, and those skilled in the art should understand it, which will not be described in detail for the purpose of simplicity.

In the present invention, the process of the MT 0 establishing uplink synchronization with the RS 1 is the same as that in the prior art, and the only difference is that, after the MT 0 sends uplink synchronization code to the RS 1, information of timing advancing comprised in the uplink timing advancing signaling that is fed back to the MT 0 by the RS 1 will change, namely, the RS1 will add original GP/2 timing advancing to original timing advancing. That is to say, the moment at which the MT 0 starts to send uplink sub-frames will be ahead of the moment indicated by original timing advancing by GP/2.

To be specific, the MT 0 firstly sends the uplink synchronization code to the RS 1 at UpPTS time slot when the MT 0 performs random access. After the RS 1 receives the uplink synchronization code from the MT 0, it sends the uplink timing advancing signaling to the MT 0 in the step S11. Wherein, the uplink timing advancing signaling comprises information of timing advancing, and in the present invention, the information of timing advancing equals to the original timing advancing plus GP/2 timing advancing. Then, in the step S12, the MT 0 receives uplink timing advancing signaling from RS 1, and the MT 0 may know when it should send uplink sub-frames to reach uplink synchronization with the RS 1 according to information of timing advancing comprised in the uplink timing advancing signaling.

Because the RS 1 adds GP/2 timing advancing to the original timing advancing, in the step S13, the MT 0 sends the second sub-frame (that is, the uplink sub-frame from the MT 0 to the RS 1) to the RS 1 ahead of the original sending moment of the second sub-frame by GP/2.

Then, in the step S14, the RS 1 starts to receive the second sub-frame from the MT 0 ahead of the original receiving moment by GP/2. Because the MT 0 starts to send the second sub-frame to the RS 1 ahead of time by GP/2, the RS 1 finishes receiving the second sub-frame from the MT 0 ahead of time by GP/2.

Because the RS 1 finishes receiving the second sub-frame ahead of time by GP/2, and accordingly, in the step S15, the RS 1 starts to send the third sub-frame (that is, the uplink sub-frame from the RS 1 to the eNB 2) to the eNB 2 ahead of time by GP/2.

After that, in the step S16, the eNB 2 receives the third sub-frame from the RS 1.

Considering that the transmission latency from the RS 1 to the eNB 2 is GP/2, and the RS 1 sends the third sub-frame ahead of the original sending moment by GP/2, therefore, as shown in Fig.3, the eNB 2 completely finishes receiving the third sub-frame from the RS 1 before starting to send the fourth sub-frame to the RS 1 so that the receiving of the third sub-frame and the sending of the fourth sub-frame of the eNB 2 will not cause interference.

Certainly, while the RS 1 sends the third sub-frame to the eNB 2, the RS 1 may also sends downlink data to the MT 0 using other frequency bands.

### Embodiment 2

The embodiment is for the scenario that the eNB 2 and the RS 1 are under synchronization of GPS and the RS 1 sends the ninth sub-frame to the MT 0 after finishing receiving the eighth sub-frame from the eNB 2. And, in the embodiment, the frequency band occupied by the data transmission between the eNB 2 and the RS 1 is different from the frequency band occupied by the data transmission between the MT 0 and the RS 1.

Fig. 5 shows a schematic diagram of the frame structure of eliminating interference by reducing the length of the GP when the eNB and RS are under synchronization of GPS, according to a second embodiment of the present invention.

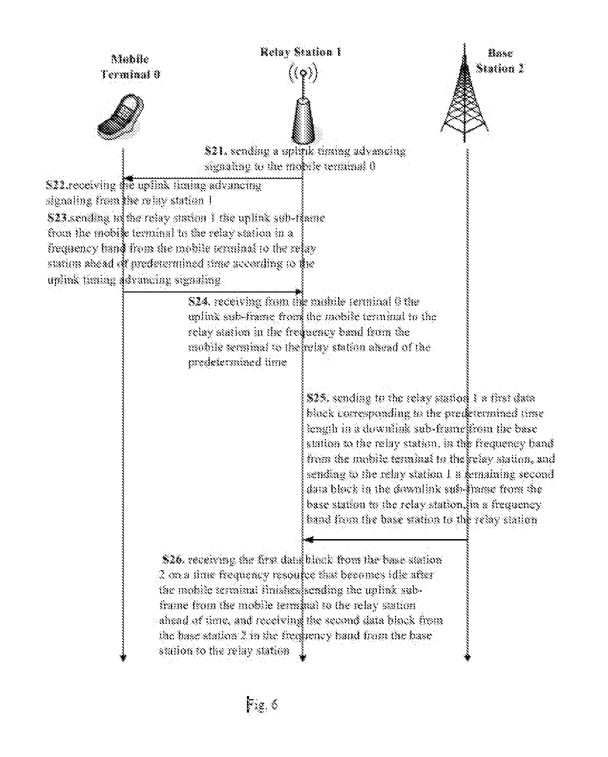

Fig. 6 shows a flowchart of method of eliminating interference by reducing the length of the GP when the eNB and RS are under synchronization of GPS, according to a second embodiment of the present invention.

For the purpose of simplicity, the frequency band used for the data transmission between the eNB 2 and the RS 1 is called as the frequency band from the eNB 2 to the RS 1; the frequency band used for the data transmission between the MT 0 and the RS 1 is called as the frequency band from the MT 0 to the RS 1.

Similar to the embodiment 1, after the MT 0 receives the uplink timing advancing signaling from the RS 1 (corresponding to the step S21 and the step S22 in Fig.6 respectively), in the step S23, the MT 0 sends uplink data to the RS 1 in the frequency band from the MT 0 to the RS 1 (in Fig.5, denoted by " 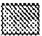 ") ahead of time by GP/2. Because the MT 0 sends uplink data to the RS 1 ahead of time by GP/2, accordingly, in the step S24, the RS 1 receives uplink data from the MT 0 in the frequency band from the MT 0 to the RS 1 ahead of time by GP/2.

At the same time, because the MT 0 finishes sending uplink data to the RS 1 ahead of time by GP/2, part of time-frequency resources of the MT 0 for sending uplink data become idle.

Because this part of time-frequency resources become idle, in the step S25, the eNB 2 sends to the RS 1 a first data block corresponding to GP/2 time length in the eighth sub-frame in the frequency band from the MT 0 to the RS 1, and sends to the RS 1 the remaining second data block in the eighth sub-frame in a frequency band from the eNB 2 to the RS 1 (in Fig.5,denoted by " 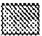 ").

Preferably, the first data block intercepted from the eighth sub-frame comprises a reference symbol, in such a way that the RS 1 can estimate the channel state from the MT 0 to the RS 1 after receiving the first data block. Certainly, if the first data block intercepted from the eighth sub-frame does not comprise a reference symbol, the eNB 2 may firstly add the reference symbol into the first data block before sending the first data block, in such a way that the RS 1 can estimate the channel state from the MT 0 to the RS 1 after receiving the first data block.

It is to be noted, the first data block intercepted from the eighth sub-frame should be sent within a specific time slot so that the RS 1 can just receive the first data block on a time frequency resource that becomes idle after the MT 0 finishes sending the uplink data ahead of time by GP/2.

Then, in the step S26, the RS 1 receives the first data block on a time frequency resource that becomes idle after the MT 0 finishes sending the uplink data ahead of time by GP/2, and receives a second data block in the frequency band from the eNB 2 to the RS 1. After then, the two parts of data blocks are merged to get the eighth sub-frame from the eNB 2.

Because the first data block in the eighth sub-frame is sent to the RS 1 using the frequency band from the MT 0 to the RS 1, as shown in Fig.5, the RS 1 has already finished receiving the eighth sub-frame from the eNB 2 before starting to send the ninth sub-frame to the MT 0 so that the receiving of the eighth sub-frame and the sending of the ninth sub-frame of the RS 1 will not cause interference.

### Embodiment 3

The embodiment is for the scenario that the eNB 2 and the RS 1 are under synchronization of GPS and the RS 1 sends the ninth sub-frame to the MT 0 after finishing receiving the eighth sub-frame from the eNB 2. And, in the embodiment, the frequency band occupied by the data transmission between the eNB 2 and the RS 1 is the same as the frequency band occupied by the data transmission between the MT 0 and the RS 1.

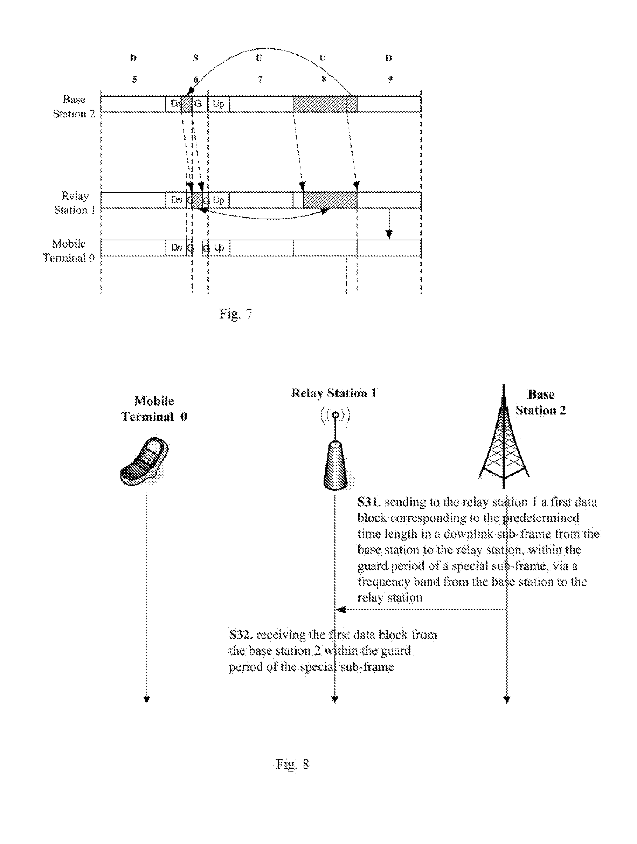

Fig. 7 shows a schematic diagram of the frame structure of eliminating interference by occupying the resource of the GP for data transmission when the eNB and RS are under synchronization of GPS, according to a third embodiment of the present invention;

Fig. 8 shows a flowchart of system method of eliminating interference by occupying the resource of the GP for data transmission when the eNB and RS are under synchronization of GPS, according to a third embodiment of the present invention;

In Fig.7, the fifth sub-frame is a downlink sub-frame, the sixth sub-frame is a special sub-frame, the seventh sub-frame is an uplink sub-frame, the eighth sub-frame is an uplink sub-frame, and the ninth sub-frame is a downlink sub-frame. Wherein, Dw (DwPTS) in the sixth sub-frame is downlink synchronization time slot, G (GP) is guard period, and Up (UpPTS) is uplink synchronization time slot.

As shown in Fig.7, in the embodiment, assuming that the eighth sub-frame is "stolen UL", which is taken as downlink sub-frame. That is, the eNB 2 sends the eighth sub-frame to the RS 1, and the RS 1 sends the ninth sub-frame to the MT 0 after finishing receiving the eighth sub-frame from the eNB 2.

Because there is transmission latency in the data transmission from the eNB 2 to the RS 1, the RS 1 does not finish receiving the eighth sub-frame from the eNB 2 while preparing to send the ninth sub-frame to the MT 0. Based on this, the eNB 2 sends part of data of the eighth sub-frame within the GP of specific sub-frame (the sixth sub-frame) in advance, and sends the remaining data of the eighth sub-frame by still using the original time frequency resources. In this way, the RS 1 just starts to send the ninth sub-frame to the MT 0 after finishing receiving the eighth sub-frame from the eNB 2.

To be specific, in the step S31, the eNB 2 sends to the RS 1 a first data block corresponding to GP/2 time length in the eighth sub-frame via the frequency band from the eNB 2 to the RS 1 within the GP of specific sub-frame.

Accordingly, considering the transmission latency from the eNB 2 to the RS 1, in the step S32, the RS 1 receives the first data block from the eNB 2 within the specific time slot of GP.

Preferably, as shown in Fig.7, the RS 1 starts to receive the first data block from the eNB 2 at the GP/4 after the starting moment of GP, and finishes receiving the first data block from the eNB 2 at the GP/4 before the end moment of GP.

Based on this, considering the transmission latency of GP/2 from the eNB 2 to the RS 1, in order to enable the RS 1 to receive the first data block from the eNB 2 within the specific time slot of GP, the eNB 2 should start to send the first data block to the RS 1 at the last GP/4 of DwPTS time slot.

It is to be noted, usually, the downlink synchronous signal sent within DwPTS time slot only occupies the very narrow frequency band, which is different from the frequency band occupied by the downlink data transmission from the eNB 2 to the RS 1, therefore, even if the eNB 2 starts to send the first data block to the RS 1 from the last GP/4 of the DwPTS time slot, it will not cause interference with that the eNB 2 sends the downlink synchronous signal within DwPTS time slot.

Certainly, the RS 1 may also start to receive the first data block from the eNB 2 at the starting time of GP, and accordingly, the eNB 2 needs to start to send the first data block to the RS 1 at the GP/2 before the starting time of GP.

### Embodiment 4

The embodiment is for the scenario that the eNB 2 and the RS 1 are under synchronization of AI and the RS 1 sends the third sub-frame to the eNB 2 after finishing receiving the second sub-frame from the MT 0. And, in the embodiment, the frequency band occupied by the data transmission between the eNB 2 and the RS 1 is different from the frequency band occupied by the data transmission between the MT 0 and the RS 1.

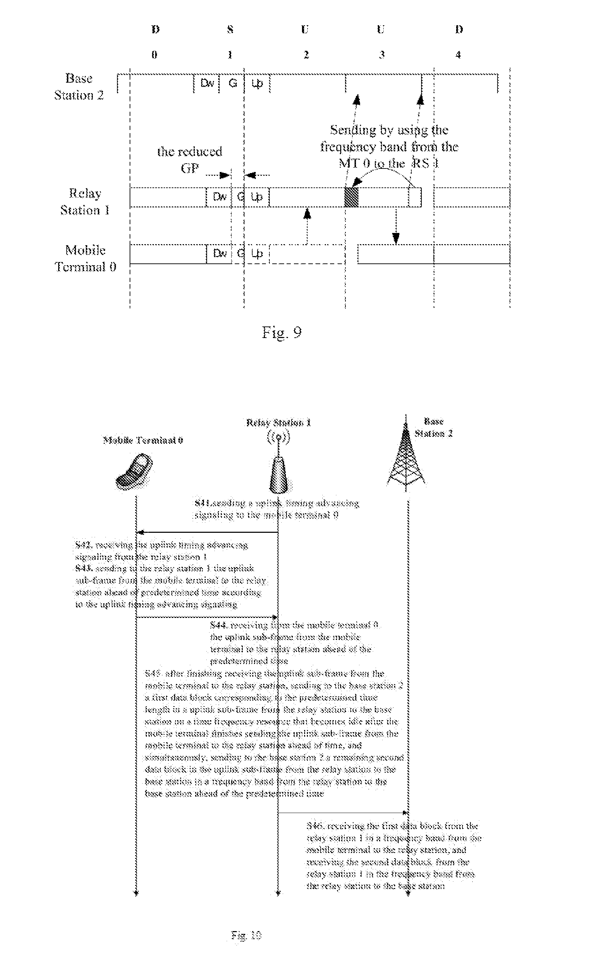

Fig. 9 shows a schematic diagram of the frame structure of eliminating interference by reducing the length of the GP when the eNB and RS are under synchronization of AI, according to a fourth embodiment of the present invention;

Fig. 10 shows a flowchart of method of eliminating interference by reducing the length of the GP when the eNB and RS are under synchronization of AI, according to a fourth embodiment of the present invention;

For the purpose of simplicity, the frequency band used for the data transmission between the eNB 2 and the RS 1 is called as the frequency band from the eNB 2 to the RS 1; the frequency band used for the data transmission between the MT 0 and the RS 1 is called as the frequency band from the MT 0 to the RS 1.

Because the eNB 2 and the RS 1 are under synchronization of AI, therefore, referring to Fig. 2, there is no interference between the eighth sub-frame and the ninth sub-frame, but the interference between the third sub-frame and the fourth sub-frame is more serious.

Similar to the embodiment 1, the MT 0 firstly sends the uplink synchronization code to the RS 1 at UpPTS time slot when the MT 0 performs random access. After the RS 1 receives the uplink synchronization code from the MT 0, it sends the uplink timing advancing signaling to the MT 0 in the step S41. Wherein, the uplink timing advancing signaling comprises information of timing advancing, and in the present invention, the information of timing advancing equals to the original timing advancing plus GP/2 timing advancing. Then, in the step S42, the MT 0 receives uplink timing advancing signaling from RS 1, and the MT 0 may know when it should send uplink sub-frames to reach uplink synchronization with the RS 1 according to information of timing advancing comprised in the uplink timing advancing signaling.

Because the RS 1 adds GP/2 timing advancing to the original timing advancing, in the step S43, the MT 0 sends the second sub-frame (that is, the uplink sub-frame from the MT 0 to the RS 1) to the RS 1 ahead of the original sending moment by GP/2.

Then, in the step S44, the RS 1 starts to receive the second sub-frame from the MT 0 ahead of the original receiving moment by GP/2. Because the MT 0 starts to send the second sub-frame to the RS 1 ahead of time by GP/2, the RS 1 finishes receiving the second sub-frame from the MT 0 ahead of time by GP/2. Because the RS 1 finishes receiving the second sub-frame ahead of time by GP/2, accordingly, the RS 1 starts to send the third sub-frame (that is, the uplink sub-frame from the RS 1 to the eNB 2) to the eNB 2 ahead of time by GP/2.

Because the MT 0 finishes sending uplink data to the RS 1 ahead of time by GP/2, part of time-frequency resources of the MT 0 for sending uplink data become idle.

Based on this, in the step S45, the RS 1 sends to the eNB 2 a first data block corresponding to GP/2 time length in the third sub-frame on the time frequency resource that becomes idle after the MT 0 finishes sending the uplink data ahead of time by GP/2, and at the same time sends to the eNB 2 the remaining second data block in the third sub-frame ahead of time by GP/2 in the frequency band from the RS 1 to the eNB 2.

Then, in the step S46, the eNB 2 receives the first data block from the RS 1 in the frequency band from the MT 0 to the RS 1, and receives the second data block from the RS 1 in the frequency band from the RS 1 to the eNB 2.

After the eNB 2 receives the first data block and the second data block on the different frequency bands, the two parts of data blocks are merged to get the third sub-frame from the RS 1.

In a variation, if the frequency band occupied by the data transmission between the eNB 2 and the RS 1 is the same as the frequency band occupied by the data transmission between the MT 0 and the RS 1, the RS 1 may send the first data block by only using the time frequency resource that becomes idle after the MT 0 finishes sending the uplink data ahead of time by GP/2. Based on this, the data block of (2P-GP/2) time length in the third sub-frame which is sent to the eNB 2 by the RS 1 is discarded, wherein P is the latency time of transmission from the RS 1 to the eNB 2. If the latency time of transmission from the RS 1 to the eNB 2 is GP/2, a data block of GP/2 time length in the third sub-frame which is sent to the eNB 2 by the RS 1 is discarded.

Hereinbefore, the technical solution of the present invention is described from the aspect of method; hereinafter, the technical solution of the present invention will be further described from the aspect of device module.

### Embodiment 5

The embodiment is for the scenario that the eNB 2 and the RS 1 are under synchronization of GPS and the RS 1 sends the third sub-frame to the eNB 2 after finishing receiving the second sub-frame from the MT 0.

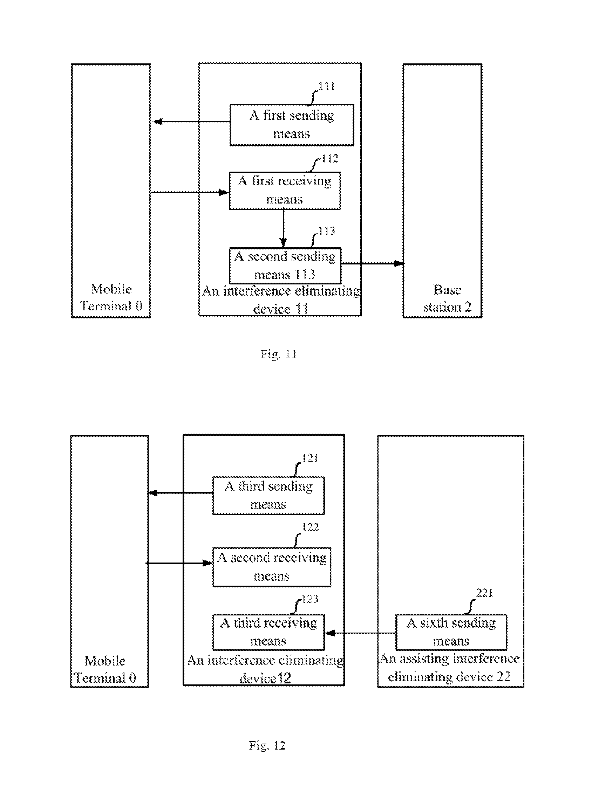

Fig. 11 shows a block diagram of system structure of eliminating interference by reducing the length of the GP when the eNB and RS are under synchronization of GPS, according to a fifth embodiment of the present invention. The MT 0, the eNB 2 and an interference eliminating device 11 in the RS 1 are shown in the Fig 11, wherein the interference eliminating device 11 comprises a first sending means 111, a first receiving means 112 and a second sending means 113.

In the embodiment, the contents of Fig.3 are taken as reference here together.

In Fig.3, the 0^{th} sub-frame is a downlink sub-frame, the first sub-frame is a special sub-frame, the second sub-frame is an uplink sub-frame, the third sub-frame is an uplink sub-frame, and the fourth sub-frame is a downlink sub-frame. Wherein, Dw (DwPTS) in the second sub-frame is downlink synchronization time slot, G (GP) is guard period, and Up (UpPTS) is uplink synchronization time slot.

Comparing Fig.2 with Fig.3, it can be seen that the eNB 3 may completely finish receiving the third sub-frame from RS before starting to send the fourth sub-frame by reducing the GP of the RS 1 to half of the GP of the eNB 2 in this embodiment.

After the MT 0 starts up, firstly downlink synchronization should be established with cell, and then uplink synchronization can be started to establish. How the MT 0 establishes downlink synchronization is the prior art, and those skilled in the art should understand it, which will not be described in detail for the purpose of simplicity.

In the present invention, the process of the MT 0 establishing uplink synchronization with the RS 1 is the same as that in the prior art, and the only difference is that, after the MT 0 sends uplink synchronization code to the RS 1, information of timing advancing comprised in the uplink timing advancing signaling that is fed back to the MT 0 by the RS 1 will change, namely, the RS1 will add original GP/2 timing advancing to original timing advancing. That is to say, the moment at which the MT 0 starts to send uplink sub-frames will be ahead of the moment indicated by original timing advancing by GP/2.

To be specific, the MT 0 firstly sends the uplink synchronization code to the RS 1 at UpPTS time slot when the MT 0 performs random access. After the RS 1 receives the uplink synchronization code from the MT 0, the first sending means 111 in the interference eliminating device 11 in the RS 1 sends the uplink timing advancing signaling to the MT 0. Wherein, the uplink timing advancing signaling comprises information of timing advancing, and in the present invention, the information of timing advancing equals to the original timing advancing plus GP/2 timing advancing. Then, the MT 0 receives uplink timing advancing signaling from RS 1, and the MT 0 may know when it should send uplink sub-frames to reach uplink synchronization with the RS 1 according to information of timing advancing comprised in the uplink timing advancing signaling.

Because the RS 1 adds GP/2 timing advancing to the original timing advancing, the MT 0 sends the second sub-frame (that is, the uplink sub-frame from the MT 0 to the RS 1) to the RS 1 ahead of the original sending moment of the second sub-frame by GP/2.

The first receiving means 112 in the interference eliminating device 11 in the RS 1 starts to receive the second sub-frame from the MT 0 ahead of the original receiving moment by GP/2. Because the MT 0 starts to send the second sub-frame to the RS 1 ahead of time by GP/2, the first receiving means 112 in the RS 1 finishes receiving the second sub-frame from the MT 0 ahead of time by GP/2.

Because the first receiving means 112 in the RS 1 finishes receiving the second sub-frame ahead of time by GP/2, and accordingly, the second sending means 113 in the interference eliminating device 11 in the RS 1 starts to send the third sub-frame (that is, the uplink sub-frame from the RS 1 to the eNB 2) to the eNB 2 ahead of time by GP/2.

After that, the eNB 2 receives the third sub-frame from the RS 1.

Considering that the transmission latency from the RS 1 to the eNB 2 is GP/2, and second sending means 113 in the RS 1 sends the third sub-frame ahead of the original sending moment by GP/2, therefore, as shown in Fig.3, the eNB 2 completely finishes receiving the third sub-frame from the RS 1 before starting to send the fourth sub-frame to the RS 1 so that the receiving of the third sub-frame and the sending of the fourth sub-frame of the eNB 2 will not cause interference.

Certainly, while the RS 1 sends the third sub-frame to the eNB 2, the RS 1 may also sends downlink data to the MTO using other frequency bands.

### Embodiment 6

The embodiment is for the scenario that the eNB 2 and the RS 1 are under synchronization of GPS and the RS 1 sends the ninth sub-frame to the MT 0 after finishing receiving the eighth sub-frame from the eNB 2. And, in the embodiment, the frequency band occupied by the data transmission between the eNB 2 and the RS 1 is different from the frequency band occupied by the data transmission between the MT 0 and the RS 1.

Fig. 12 shows a block diagram of system structure of eliminating interference by reducing the length of the GP when the eNB and RS are under synchronization of GPS, according to a sixth embodiment of the present invention. The MT 0, an interference eliminating device 12 in the RS 1 and an assisting interference eliminating device 22 in the eNB 2 are shown in Fig 12, wherein, the interference eliminating device 12 comprises a third sending means 121, a second receiving means 122 and a third receiving means 123, and the assisting interference eliminating device 22 comprises a sixth sending means 221.

In the embodiment, the contents of Fig.5 are taken as reference here together.

For the purpose of simplicity, the frequency band used for the data transmission between the eNB 2 and the RS 1 is called as the frequency band from the eNB 2 to the RS 1; the frequency band used for the data transmission between the MT 0 and the RS 1 is called as the frequency band from the MT 0 to the RS 1.

Similar to the embodiment 5, after the MT 0 receives the uplink timing advancing signaling from the third sending means 121 in the interference eliminating device 12 in the RS 1, the MT 0 sends uplink data to the RS 1 in the frequency band from the MT 0 to the RS 1 (in Fig.5, denoted by " 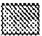 ") ahead of time by GP/2. Because the MT 0 sends uplink data to the RS 1 ahead of time by GP/2, accordingly, the second receiving means 122 in the interference eliminating device 12 in the RS 1 receives uplink data from the MT 0 in the frequency band from the MT 0 to the RS 1 ahead of time by GP/2.

At the same time, because the MT 0 finishes sending uplink data to the RS 1 ahead of time by GP/2, part of time-frequency resources of the MT 0 for sending uplink data become idle.

Because this part of time-frequency resources become idle, the sixth sending means 221 in the assisting interference eliminating device 22 in the eNB 2 sends to the RS 1 a first data block corresponding to GP/2 time length in the eighth sub-frame in the frequency band from the MT 0 to the RS 1, and sends to the RS 1 the remaining second data block in the eighth sub-frame in a frequency band from the eNB 2 to the RS 1 (in Fig.5,denoted by " 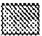 ").

Preferably, the first data block intercepted from the eighth sub-frame comprises a reference symbol, so that the RS 1 can estimate the channel state from the MT 0 to the RS 1 after receiving the first data block. Certainly, if the first data block intercepted from the eighth sub-frame does not comprise a reference symbol, the sixth sending means 221 in the eNB 2 may firstly add the reference symbol into the first data block before sending the first data block, so that the RS 1 can estimate the channel state from the MT 0 to the RS 1 after receiving the first data block.

It is to be noted, the first data block intercepted from the eighth sub-frame should be sent within a specific time slot so that the RS 1 can just receive the first data block on a time frequency resource that becomes idle after the MT 0 finishes sending the uplink data ahead of time by GP/2.

Then, the third receiving means 123 in the interference eliminating device 12 in the RS 1 receives the first data block on a time frequency resource that becomes idle after the MT 0 finishes sending the uplink data ahead of time by GP/2, and receives a second data block in the frequency band from the eNB 2 to the RS 1. After then, the two parts of data blocks are merged to get the eighth sub-frame from the eNB 2.

Because the first data block in the eighth sub-frame is sent to the RS 1 using the frequency band from the MT 0 to the RS 1, as shown in Fig.5, the RS 1 has already finished receiving the eighth sub-frame from the eNB 2 before starting to send the ninth sub-frame to the MT 0 so that the receiving of the eighth sub-frame and the sending of the ninth sub-frame of the RS 1 will not cause interference.

### Embodiment 7

The embodiment is for the scenario that the eNB 2 and the RS 1 are under synchronization of GPS and the RS 1 sends the ninth sub-frame to the MT 0 after finishing receiving the eighth sub-frame from the eNB 2. And, in the embodiment, the frequency band occupied by the data transmission between the eNB 2 and the RS 1 is the same as the frequency band occupied by the data transmission between the MT 0 and the RS 1.

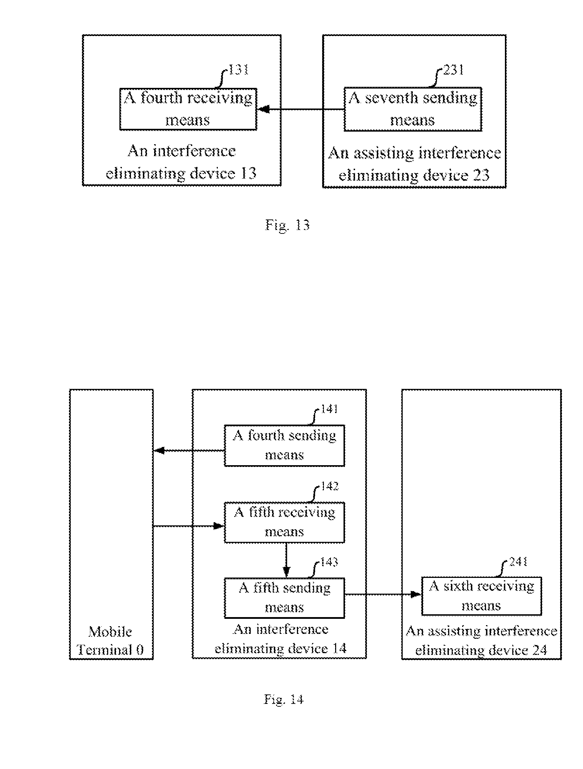

Fig. 13 shows a block diagram of system structure of eliminating interference by occupying the resource of the GP for data transmission when the eNB and RS are under synchronization of GPS, according to a seventh embodiment of the present invention. The interference eliminating device 13 in the RS 1 and the assisting interference eliminating device 23 in the eNB 2 are shown in Fig 13, wherein, the interference eliminating device 13 comprises the fourth receiving means 131, the assisting interference eliminating device 23 comprises the seventh sending means 231.

In the embodiment, the contents of Fig.7 are taken as reference here together.

In Fig.7, the fifth sub-frame is a downlink sub-frame, the sixth sub-frame is a special sub-frame, the seventh sub-frame is an uplink sub-frame, the eighth sub-frame is an uplink sub-frame, and the ninth sub-frame is a downlink sub-frame. Wherein, Dw (DwPTS) in the sixth sub-frame is downlink synchronization time slot, G (GP) is guard period, and Up (UpPTS) is uplink synchronization time slot.

As shown in Fig.7, in the embodiment, assuming that the eighth sub-frame is "stolen UL", which is taken as downlink sub-frame. That is, the eNB 2 sends the eighth sub-frame to the RS 1, and the RS 1 sends the ninth sub-frame to the MT 0 after finishing receiving the eighth sub-frame from the eNB 2.

Because there is transmission latency in the data transmission from the eNB 2 to the RS 1, the RS 1 does not finish receiving the eighth sub-frame from the eNB 2 while preparing to send the ninth sub-frame to the MT 0. Based on this, the eNB 2 sends part of data of the eighth sub-frame within the GP of specific sub-frame (the sixth sub-frame) in advance, and sends the remaining data of the eighth sub-frame by still using the original time frequency resources. In this way, the RS 1 just starts to send the ninth sub-frame to the MT 0 after finishing receiving the eighth sub-frame from the eNB 2.

To be specific, the seventh sending means 231 in the assisting interference eliminating device 23 in the eNB 2 sends to the RS 1 a first data block corresponding to GP/2 time length in the eighth sub-frame via the frequency band from the eNB 2 to the RS 1 within the GP of specific sub-frame.

Accordingly, considering the transmission latency from the eNB 2 to the RS 1, the fourth receiving means 131 in the interference eliminating device 13 in the RS 1 receives the first data block from the eNB 2 within the specific time slot of GP.

Preferably, as shown in Fig.7, the fourth receiving means 131 in the RS 1 starts to receive the first data block from the eNB 2 at the GP/4 after the starting moment of GP, and finishes receiving the first data block from the eNB 2 at the GP/4 before the end moment of GP.

Based on this, considering the transmission latency of GP/2 from the eNB 2 to the RS 1, in order to enable the fourth receiving means 131 in the RS 1 to receive the first data block from the eNB 2 within the specific time slot of GP, the seventh sending means 231 in the eNB 2 should start to send the first data block to the RS 1 at the last GP/4 of DwPTS time slot.

It is to be noted, usually, the downlink synchronous signal sent within DwPTS time slot only occupy the very narrow frequency band, which is different from the frequency band occupied by the downlink data transmission from the eNB 2 to the RS 1, therefore, even if the eNB 2 starts to send the first data block to the RS 1 from the last GP/4 of the DwPTS time slot, it will not cause interference with that the eNB 2 sends the downlink synchronous signal within DwPTS time slot.

Certainly, the RS 1 may also start to receive the first data block from the eNB 2 at the starting time of GP, and accordingly, the eNB 2 needs to start to send the first data block to the RS 1 at the GP/2 before the starting time of GP.

### Embodiment 8

The embodiment is for the scenario that the eNB 2 and the RS 1 are under synchronization of AI and the RS 1 sends the third sub-frame to the eNB 2 after finishing receiving the second sub-frame from the MT 0. And, in the embodiment, the frequency band occupied by the data transmission between the eNB 2 and the RS 1 is different from the frequency band occupied by the data transmission between the MT 0 and the RS 1.

Fig. 14 shows a block diagram of system structure of eliminating interference by reducing the length of the GP when the eNB and RS are under synchronization of AI, according to a eighth embodiment of the present invention. The MT 0, an interference eliminating device 14 in the RS 1 and an assisting interference eliminating device 24 in eNB 2 are shown in Fig 14, wherein the interference eliminating device 14 comprises a fourth sending means 141, a fifth receiving means 142 and a fifth sending means 143, and the assisting interference eliminating device 24 comprises a sixth receiving means 241.

In the embodiment, the contents of Fig.9 are taken as reference here together.

For the purpose of simplicity, the frequency band used for the data transmission between the eNB 2 and the RS 1 is called as the frequency band from the eNB 2 to the RS 1; the frequency band used for the data transmission between the MT 0 and the RS 1 is called as the frequency band from the MT 0 to the RS 1.

Because the eNB 2 and the RS 1 are under synchronization of AI, therefore, referring to Fig. 2, there is no interference between the eighth sub-frame and the ninth sub-frame, but the interference between the third sub-frame and the fourth sub-frame is more serious.

Similar to the embodiment 5, the MT 0 firstly sends the uplink synchronization code to the RS 1 at UpPTS time slot when the MT 0 performs random access. After the RS 1 receives the uplink synchronization code from the MT 0, the fourth sending means 141 in the interference eliminating device 14 in the RS 1 sends the uplink timing advancing signaling to the MT 0. Wherein, the uplink timing advancing signaling comprises information of timing advancing, and in the present invention, the information of timing advancing equals to the original timing advancing plus GP/2 timing advancing. Then, the MT 0 receives uplink timing advancing signaling from RS 1, and the MT 0 may know when it should send uplink sub-frames to reach uplink synchronization with the RS 1 according to information of timing advancing comprised in the uplink timing advancing signaling.

Because the RS 1 adds GP/2 timing advancing to the original timing advancing, the MT 0 sends the second sub-frame (that is, the uplink sub-frame from the MT 0 to the RS 1) to the RS 1 ahead of the original sending moment by GP/2.

The fifth receiving means 142 in interference eliminating device 14 in the RS 1 starts to receive the second sub-frame from the MT 0 ahead of the original time by GP/2. Because the MT 0 starts to send the second sub-frame to the RS 1 ahead of receiving moment by GP/2, the fifth receiving means 142 in the RS 1 finishes receiving the second sub-frame from the MT 0 ahead of time by GP/2. Because The fifth receiving means 142 in the RS 1 finishes receiving the second sub-frame ahead of time by GP/2, accordingly, the fifth sending means 143 in interference eliminating device 14 in the RS 1 starts to send the third sub-frame (that is, the uplink sub-frame from the RS 1 to the eNB 2) to the eNB 2 ahead of time by GP/2.

Because the MT 0 finishes sending uplink data to the RS 1 ahead of time by GP/2, part of time-frequency resources of the MT 0 for sending uplink data become idle.

Based on this, the fifth sending means 143 in the interference eliminating device 14 in the RS 1 sends to the eNB 2 a first data block corresponding to GP/2 time length in the third sub-frame on the time frequency resource that becomes idle after the MT 0 finishes sending the uplink data ahead of time by GP/2, and at the same time sends to the eNB 2 the remaining second data block in the third sub-frame ahead of time by GP/2 in the frequency band from the RS 1 to the eNB 2.

The sixth receiving means 241 in the assisting interference eliminating device 24 in the eNB 2 receives the first data block from the RS 1 in the frequency band from the MT 0 to the RS 1, and receives the second data block from the RS 1 in the frequency band from the RS 1 to the eNB 2.

After the eNB 2 receives the first data block and the second data block on the different frequency bands, the two parts of data blocks are merged to get the third sub-frame from the RS 1.

In a variation, if the frequency band occupied by the data transmission between the eNB 2 and the RS 1 is the same as the frequency band occupied by the data transmission between the MT 0 and the RS 1, the RS 1 may send the first data block by only using the time frequency resource that becomes idle after the MT 0 finishes sending the uplink data ahead of time by GP/2. Based on this, the data block of (2P-GP/2) time length in the third sub-frame which is sent to the eNB 2 by the RS 1 is discarded, wherein P is the latency time of transmission from the RS 1 to the eNB 2. If the latency time of transmission from the RS 1 to the eNB 2 is GP/2, a data block of GP/2 time length in the third sub-frame which is sent to the eNB 2 by the RS 1 is discarded.

The detailed embodiments of the present invention are described hereinbefore, it needs to be understood that the present invention is not limited to the aforesaid specific embodiments, those skilled in the art may make all kinds of variation or modification within the scope of the appended claims.

## Claims

1. A method of eliminating interference in a wireless relay TDD system, wherein, the method comprises the step of:
reducing the guard period of a relay station by a predetermined time length and performing data receiving and data sending by using the reduced predetermined time length.

2. The method according to claim 1, wherein, when a base station and a relay station are under synchronization of global positioning system, the method comprises the following steps of:
a. a relay station sending a uplink timing advancing signaling to a mobile terminal, wherein the uplink timing advancing signaling is used for informing the mobile terminal of the time of sending a uplink sub-frame from the mobile terminal to the relay station;
b. the mobile terminal receiving the uplink timing advancing signaling from the relay station;
c. the mobile terminal sending to the relay station the uplink sub-frame from the mobile terminal to the relay station ahead of predetermined time according to the uplink timing advancing signaling;
d. the relay station receiving from the mobile terminal the uplink sub-frame from the mobile terminal to the relay station ahead of the predetermined time;
e. the relay station sending to a base station a uplink sub-frame from the relay station to the base station, after finishing receiving the uplink sub-frame from the mobile terminal to the relay station;
f. the base station receiving from the relay station the uplink sub-frame from the relay station to the base station.

3. The method according to claim 1, wherein, when a base station and a relay station are under synchronization of global positioning system, and the data transmission between a base station and a relay station and the data transmission between a mobile terminal and a relay station use different frequency bands, the method further comprises the following steps of:
A. the relay station sending a uplink timing advancing signaling to the mobile terminal, wherein the uplink timing advancing signaling is used for informing the mobile terminal of the time of sending a uplink sub-frame from the mobile terminal to the relay station;
B. the mobile terminal receiving the uplink timing advancing signaling from the relay station;
C. the mobile terminal sending to the relay station the uplink sub-frame from the mobile terminal to the relay station in a frequency band from the mobile terminal to the relay station ahead of predetermined time according to the uplink timing advancing signaling;
D. the relay station receiving from the mobile terminal the uplink sub-frame from the mobile terminal to the relay station in the frequency band from the mobile terminal to the relay station ahead of the predetermined time;
E. the base station sending to the relay station a first data block corresponding to the predetermined time length in a downlink sub-frame from the base station to the relay station, in the frequency band from the mobile terminal to the relay station, and sending to the relay station a remaining second data block in the downlink sub-frame from the base station to the relay station, in a frequency band from the base station to the relay station;
F. the relay station receiving the first data block from the base station on a time frequency resource that becomes idle after the mobile terminal finishes sending the uplink sub-frame from the mobile terminal to the relay station ahead of time, and receiving the second data block from the base station in the frequency band from the base station to the relay station.

4. The method according to claim 1, wherein, when a base station and a relay station are under synchronization of global positioning system, and the data transmission between a base station and a relay station and the data transmission between a mobile terminal and a relay station use same frequency bands, the method further comprises the following steps of:
i. the base station sending to the relay station a first data block corresponding to the predetermined time length in a downlink sub-frame from the base station to the relay station, within the guard period of a special sub-frame, via a frequency band from the base station to the relay station;
ii. the relay station receiving the first data block from the base station within the guard period of the special sub-frame.

5. The method according to claim 1, wherein, when a base station and a relay station are under synchronization of air interface, and the data transmission between a base station and a relay station and the data transmission between a mobile terminal and a relay station use different frequency bands, the method further comprises the following steps of:
I. the relay station sending a uplink timing advancing signaling to the mobile terminal, wherein the uplink timing advancing signaling is used for informing the mobile terminal of the time of sending a uplink sub-frame from the mobile terminal to the relay station;
II. the mobile terminal receiving the uplink timing advancing signaling from the relay station;
III. the mobile terminal sending to the relay station the uplink sub-frame from the mobile terminal to the relay station ahead of predetermined time according to the uplink timing advancing signaling;
IV. the relay station receiving from the mobile terminal the uplink sub-frame from the mobile terminal to the relay station ahead of the predetermined time;
V. after finishing receiving the uplink sub-frame from the mobile terminal to the relay station, the relay station sending to the base station a first data block corresponding to the predetermined time length in a uplink sub-frame from the relay station to the base station on a time frequency resource that becomes idle after the mobile terminal finishes sending the uplink sub-frame from the mobile terminal to the relay station ahead of time, and simultaneously, sending to the base station a remaining second data block in the uplink sub-frame from the relay station to the base station in a frequency band from the relay station to the base station ahead of the predetermined time;
VI. the base station receiving the first data block from the relay station in a frequency band from the mobile terminal to the relay station, and receiving the second data block from the relay station in the frequency band from the relay station to the base station.

6. The method according to any one of claims 3 to 5, wherein, the first data block comprises a reference symbol for channel estimation.

7. The method according to any one of claims 2 to 5, wherein, the predetermined time is half of the guard period.

8. A method of eliminating interference in a relay station of a wireless relay TDD system, wherein, the method comprises the step of: reducing the guard period of a relay station by a predetermined time length and performing data receiving and data sending by using the reduced predetermined time length.

9. The method according to claim 8, wherein, when a base station and a relay station are under synchronization of global positioning system, the method comprises the following steps of:
m. sending a uplink timing advancing signaling to a mobile terminal, wherein the uplink timing advancing signaling is used for informing the mobile terminal of the time of sending a uplink sub-frame from the mobile terminal to the relay station;
n. receiving from the mobile terminal the uplink sub-frame from the mobile terminal to the relay station ahead of the predetermined time;
o. sending to the base station a uplink sub-frame from the relay station to the base station, after receiving the uplink sub-frame from the mobile terminal to the relay station;

10. The method according to claim 8, wherein, when a base station and a relay station are under synchronization of global positioning system, and the data transmission between a base station and a relay station and the data transmission between a mobile terminal and a relay station use different frequency bands, the method further comprises the following steps of:
M. sending a uplink timing advancing signaling to the mobile terminal, wherein the uplink timing advancing signaling is used for informing the mobile terminal of the time of sending a uplink sub-frame from the mobile terminal to the relay station;
N. receiving from the mobile terminal the uplink sub-frame from the mobile terminal to the relay station in a frequency band from the mobile terminal to the relay station ahead of the predetermined time;
O. receiving a first data block from the base station on a time frequency resource that becomes idle after the mobile terminal finished sending the uplink sub-frame from the mobile terminal to the relay station ahead of time, and receiving a second data block from the base station in a frequency band from the base station to the relay station.

11. The method according to claim 8, wherein, when a base station and a relay station are synchronization of global positioning system, and the data transmission between a base station and a relay station and the data transmission between a mobile terminal and a relay station use same frequency bands, the method further comprises the following steps of:
x. receiving a first data block from the base station within the guard period of a special sub-frame.

12. The method according to claim 8, wherein, when a base station and a relay station are under synchronization of air interface, and the data transmission between a base station and a relay station and the data transmission between a mobile terminal and a relay station use different frequency bands, the method further comprises the following steps of:
X. sending a uplink timing advancing signaling to the mobile terminal, wherein the uplink timing advancing signaling is used for informing the mobile terminal of the time of sending a uplink sub-frame from the mobile terminal to the relay station;
Y. receiving from the mobile terminal the uplink sub-frame from the mobile terminal to the relay station ahead of the predetermined time;
Z. after finishing receiving the uplink sub-frame from the mobile terminal to the relay station, sending to the base station a first data block corresponding to the predetermined time length in a uplink sub-frame from the relay station to the base station on a time frequency resource that becomes idle after the mobile terminal finishes sending the uplink sub-frame from the mobile terminal to the relay station ahead of time, and simultaneously, sending to the base station a remaining second data block in the uplink sub-frame from the relay station to the base station in a frequency band from the relay station to the base station ahead of the predetermined time;

13. The method according to any one of claims 10 to 12, wherein, the first data block comprises a reference symbol for channel estimation.

14. The method according to any one of claims 9, 10, 12, wherein, the predetermined time is half of the guard period.

15. A method of assisting a relay station to eliminate interference in a base station of a wireless relay TDD system, wherein, the method comprises the step of: assisting the relay station that uses the method according to any one of claims 8 to 14, to perform data receiving and sending.

16. The method according to claim 15, wherein, when a base station and a relay station are under synchronization of global positioning system, and the data transmission between a base station and a relay station and the data transmission between a mobile terminal and a relay station use different frequency bands, the method further comprises the following step of:
S. sending to the relay station a first data block corresponding to the predetermined time length in a downlink sub-frame from the base station to the relay station in a frequency band from the mobile terminal to the relay station, and sending to the relay station a remaining second data block in the downlink sub-frame from the base station to the relay station in a frequency band from the base station to the relay station.

17. The method according to claim 15, wherein, when a base station and a relay station are under synchronization of global positioning system, and the data transmission between a base station and a relay station and the data transmission between a mobile terminal and a relay station use same frequency bands, the method further comprises the following step of:
s. sending to the relay station a first data block corresponding to the predetermined time length in a downlink sub-frame from the base station to the relay station, within the guard period of a special sub-frame, via a frequency band from the base station to the relay station.

18. The method according to claim 15, wherein, when a base station and a relay station are under synchronization of air interface, and the data transmission between a base station and a relay station and the data transmission between a mobile terminal and a relay station use different frequency bands, the method further comprises the following step of:
u. receiving a first data block from the relay station in a frequency band from the mobile terminal to the relay station, and receiving a second data block from the relay station in a frequency band from the relay station to the base station.

19. The method according to any one of claims 16 to 18, wherein, the first data block comprises a reference symbol for channel estimation.

20. The method according to claim 16 or 17, wherein, the predetermined time is half of the guard period.

21. An interference eliminating device for eliminating interference in a wireless relay TDD system, wherein, the interference eliminating device is used for reducing the guard period of a relay station by a predetermined time length and performing data receiving and data sending by using the reduced predetermined time length.

22. The interference eliminating device according to claim 21, wherein, when a base station and a relay station are under synchronization of global positioning system, the interference eliminating device comprises:
a first sending means, for sending a uplink timing advancing signaling to a mobile terminal, wherein the uplink timing advancing signaling is used for informing the mobile terminal of the time of sending a uplink sub-frame from the mobile terminal to the relay station;
a first receiving means, for receiving from the mobile terminal the uplink sub-frame from the mobile terminal to the relay station ahead of predetermined time;
a second sending means, for sending to a base station a uplink sub-frame from the relay station to the base station, after finishing receiving the uplink sub-frame from the mobile terminal to the relay station.

23. The interference eliminating device according to claim 21, wherein, when a base station and a relay station are under synchronization of global positioning system, and the data transmission between a base station and a relay station and the data transmission between a mobile terminal and a relay station use different frequency bands, the interference eliminating device further comprises:
a third sending means, for sending a uplink timing advancing signaling to the mobile terminal, wherein the uplink timing advancing signaling is used for informing the mobile terminal of the time of sending a uplink sub-frame from the mobile terminal to the relay station;
a second receiving means, for receiving from the mobile terminal the uplink sub-frame from the mobile terminal to the relay station in a frequency band from the mobile terminal to the relay station ahead of the predetermined time;
a third receiving means, for receiving a first data block from the base station on a time frequency resource that becomes idle after the mobile terminal finishes sending the uplink sub-frame from the mobile terminal to the relay station ahead of time, and receiving a second data block from the base station in a frequency band from the base station to the relay station.

24. The interference eliminating device according to claim 21, wherein, when a base station and a relay station are under synchronization of global positioning system, and the data transmission between a base station and a relay station and the data transmission between a mobile terminal and a relay station use same frequency bands, the interference eliminating device further comprises:
a fourth receiving means, for receiving the first data block from the base station within the guard period of the special sub-frame.

25. The interference eliminating device according to claim 21, wherein, when a base station and a relay station are under synchronization of air interface, and the data transmission between a base station and a relay station and the data transmission between a mobile terminal and a relay station use different frequency bands, the interference eliminating device further comprises:
a fourth sending means, for sending a uplink timing advancing signaling to the mobile terminal, wherein the uplink timing advancing signaling is used for informing the mobile terminal of the time of sending a uplink sub-frame from the mobile terminal to the relay station;
a fifth receiving means, for receiving from the mobile terminal the uplink sub-frame from the mobile terminal to the relay station ahead of predetermined time;
a fifth sending means, for sending to the base station a first data block corresponding to the predetermined time length in a uplink sub-frame from the relay station to the base station on a time frequency resource that becomes idle after the mobile terminal finishes sending the uplink sub-frame from the mobile terminal to the relay station ahead of time, after finishing receiving the uplink sub-frame from the mobile terminal to the relay station, and simultaneously, for sending to the base station a remaining second data block in the uplink sub-frame from the relay station to the base station in a frequency band from the relay station to the base station ahead of the predetermined time;

26. The interference eliminating device according to any one of claims 23 to 25, wherein, the first data block comprises a reference symbol for channel estimation.

27. The interference eliminating device according to any one of claims 22, 23, and 25, wherein, the predetermined time is half of the guard period.

28. An assisting interference eliminating device, for assisting a relay station to eliminate interference in a base station of a wireless relay TDD system, wherein, the assisting interference eliminating device is used for assisting the relay station that uses the interference eliminating device according to any one of claims 21 to 27, to perform data receiving and sending.

29. The assisting interference eliminating device according to claim 28, wherein, when a base station and a relay station are under synchronization of global positioning system, and the data transmission between a base station and a relay station and the data transmission between a mobile terminal and a relay station use different frequency bands, the assisting interference eliminating device further comprises:
a sixth sending means, for sending to the relay station a first data block corresponding to the predetermined time length in a downlink sub-frame from the base station to the relay station in a frequency band from the mobile terminal to the relay station, and sending to the relay station a remaining second data block in the downlink sub-frame from the base station to the relay station in a frequency band from the base station to the relay station.

30. The assisting interference eliminating device according to claim 28, wherein, when a base station and a relay station are under synchronization of global positioning system, and the data transmission between a base station and a relay station and the data transmission between a mobile terminal and a relay station use same frequency bands, the assisting interference eliminating device further comprises:
a seventh sending means, for sending to the relay station a first data block corresponding to the predetermined time length in a downlink sub-frame from the base station to the relay station, within the guard period of a special sub-frame, via a frequency band from the base station to the relay station.

31. The assisting interference eliminating device according to claim 28, wherein, when a base station and a relay station are under synchronization of air interface, and the data transmission between a base station and a relay station and the data transmission between a mobile terminal and a relay station use different frequency bands, the assisting interference eliminating device further comprises:
a sixth receiving means, for receiving a first data block from the relay station in a frequency band from the mobile terminal to the relay station, and receiving a second data block from the relay station in a frequency band from the relay station to the base station.

32. The assisting interference eliminating device according to any one of claims 29 to 31, wherein, the first data block comprises a reference symbol for channel estimation.

33. The assisting interference eliminating device according to claim 29 or 30, wherein, the predetermined time is half of the guard period.
